# EUROPÄISCHE PATENTSCHRIFT

(11) **EP 1 664 386 B1**
(45) Veröffentlichungstag und Bekanntmachung des Hinweises auf die Patenterteilung: **11.01.2012**
(21) Anmeldenummer: 04764639.3
(22) Anmeldetag: 31.08.2004
(51) Int. Cl.: C25B 1/46, C25B 1/26, C25B 15/02, C25B 15/08

(54) **VERFAHREN ZUR ELEKTROLYSE EINER WÄSSRIGEN LÖSUNG VON CHLORWASSERSTOFF ODER ALKALICHLORID**
METHOD FOR THE ELECTROLYSIS OF AN AQUEOUS SOLUTION OF HYDROGEN CHLORIDE OR CHLORALKALI
PROCEDE POUR REALISER L'ELECTROLYSE D'UNE SOLUTION AQUEUSE DE CHLORURE D'HYDROGENE OU DE CHLORURE ALCALIN

(30) Priorität: 12.09.2003 DE 10342148
(43) Veröffentlichungstag der Anmeldung: 07.06.2006
(73) Patentinhaber: Bayer MaterialScience AG, 51368 Leverkusen (DE)
(72) Erfinder: GESTERMANN, Fritz, 51377 Leverkusen (DE); MALCHOW, Richard, 50769 Köln (DE); HANSEN, Walter, 51375 Leverkusen (DE); SENGSTOCK, Gaby, 51379 Leverkusen (DE)
(86) Internationale Anmeldenummer: PCT/EP2004/009673
(87) Internationale Veröffentlichungsnummer: WO 2005/028708

(56) Entgegenhaltungen:
- CA-A1- 2 466 498
- US-A- 3 817 717

## Beschreibung

Die Erfindung betrifft ein Verfahren zur Elektrolyse einer wässrigen Lösung von Chlorwasserstoff oder Alkalichlorid mittels einer Gasdiffusionselektrode als Kathode.

Die Elektrolyse von wässrigen Lösungen von Chlorwasserstoff (Salzsäure) und wässrigen Alkalichloridlösungen kann elektrolytisch unter Einsatz von Gasdiffusionselektroden als Sauerstoffverzehrkathoden erfolgen. Dabei wird in den Kathodenraum der Elektrolysezelle Sauerstoff, Luft oder mit Sauerstoff angereicherte Luft im Überschuss eingespeist. Durch den Einsatz von Sauerstoffverzehrkathoden wird die Elektrolysespannung um ca. 30 % im Vergleich zu herkömmlichen Salzsäure- oder Chloralkalielektrolysen gesenkt.

Ein Verfahren zur Elektrolyse von Salzsäure ist beispielsweise aus US-A 5 770 035 bekannt. Ein Anodenraum mit einer geeigneten Anode, bestehend z.B. aus einem Substrat aus einer Titan-Palladium-Legierung, welches mit einem Mischoxid aus Ruthenium, Iridium und Titan beschichtet ist, wird mit Salzsäure gefüllt. Das an der Anode gebildete Chlor entweicht aus dem Anodenraum und wird einer geeigneten Aufarbeitung zugeführt. Der Anodenraum ist von dem Kathodenraum durch eine handelsübliche Kationenaustauschermembran getrennt. Auf der Kathodenseite liegt eine Gasdiffusionselektrode (Sauerstoffverzehrkathode) auf der Kationenaustauschermembran auf. Die Sauerstoffverzehrkathode liegt wiederum auf einem Stromverteiler auf. An der Sauerstoffverzehrkathode wird der dem Kathodenraum zugeführte Sauerstoff umgesetzt.

Aus EP-A 1 067 215 ist ein Verfahren zur Elektrolyse einer wässrigen Alkalichloridlösung unter Verwendung einer Sauerstoffverzehrkathode bekannt. Die Elektrolysezelle setzt sich aus einem Anodenhalbelement und einem Kathodenhalbelement zusammen, welche durch eine Kationenaustauschermembran voneinander getrennt sind. Das Kathodenhalbelement besteht aus einem Elektrolytraum und einem Gasraum, wobei der Elektrolytraum von dem Gasraum von einer Sauerstoffverzehrkathode getrennt ist. Der Elektrolytraum ist mit Alkalihydroxidlösung gefüllt. Der Gasraum wird mit Sauerstoff bespeist. Der Anodenraum wird mit alkalichloridhaltiger Lösung befüllt.

Die Bildung von Wasserstoff an Sauerstoffverzehrkathoden ist in der Regel vollständig unterbunden. U.a. aufgrund von Konkurrenzreaktionen können jedoch auch bei ausreichender Sauerstoffversorgung Spuren von Wasserstoff gebildet werden. Der Wasserstoff wird zusammen mit dem überschüssigen Sauerstoff aus dem Kathodenraum abgezogen. Nach bisherigen Verfahren wird der Sauerstoff nach einer Abgasreinigung in die Abluft abgegeben, da beim Rezyklieren die Gefahr der Aufkonzentrierung des Wasserstoffs über die Explosionsgrenze von 4 Vol.-% besteht. Nachfolgend wird der dem Kathodenhalbelement zugeführte Sauerstoff bzw. die zugeführte Luft, welche ggf. mit Sauerstoff angereichert ist, vereinfachend auch als Sauerstoff bezeichnet.

Aus CA-A 2 466 498 ist ein Verfahren zur Elektrolyse einer wässrigen Alkalichloridlösung unter Verwendung einer Sauerstoffverzehrkathode bekannt, in dem Wasserstoff katalytisch oxidiert wird.

Die Aufgabe der vorliegenden Erfindung besteht darin, den im Überschuss eingesetzten Sauerstoff auf wirtschaftliche Weise zu rezyklieren. Es soll ein Verfahren bereit gestellt werden, bei dem der überschüssige Sauerstoff dem Elektrolyseprozess mehrfach zur Verfügung gestellt werden kann.

Gegenstand der Erfindung ist ein Verfahren gemäβ Anspruch 1 zur Elektrolyse einer wässrigen Lösung von Chlorwasserstoff oder Alkalichlorid in einer Elektrolysezelle, wenigstens bestehend aus einem Anodenhalbelement und einer Anode, einem Kathodenhalbelement und einer Gasdiffusionselektrode als Kathode, einer Kationenaustauschermembran zur Trennung des Anodenhalbelements und des Kathodenhalbelements, wobei dem Kathodenhalbelement ein Sauerstoff enthaltendes Gas zugeführt und überschüssiges, Sauerstoff enthaltendes Gas aus dem Kathodenhalbelement abgeführt wird, welches dadurch gekennzeichnet ist, dass das aus dem Kathodenhalbelement abgeführte überschüssige, Sauerstoff enthaltende Gas einer katalytischen Oxidation von Wasserstoff unterworfen wird.

Das Sauerstoff enthaltende Gas, welches im Überschuss in das Kathodenhalbelement eingespeist wird, ist z.B. Sauerstoff, Luft oder mit Sauerstoff angereicherte Luft. Mit Hilfe der katalytischen Oxidation von Wasserstoff, welcher in dem Überschuss an Sauerstoff enthaltendem Gas beim Austritt aus dem Kathodenhalbelement vorhanden ist, wird der Gehalt an Wasserstoff verringert, insbesondere auf maximal 2 Vol.-%. Dies ermöglicht den im Überschuss eingesetzten Sauerstoff der Kathodenhalbzelle erneut zuzuführen, ohne dass bei mehrfacher Rezyklierung die Gefahr der Anreicherung bis zur Explosionsgrenze des Sauerstoff-Wasserstoff-Gemisches besteht.

Zur katalytischen Oxidation von Wasserstoff wird in einer bevorzugten Ausführungsform der Überschuss an Sauerstoff enthaltendem Gas zur Oxidation von Wasserstoff durch einen Katalysator, wenigstens bestehend aus einem Trägerkörper aus Keramik oder Metall, vorzugsweise Keramik, und einer Beschichtung, enthaltend ein katalytisch aktives Edelmetall, geleitet.

Der Trägerkörper des Katalysators ist bevorzugt monolithisch. Der monolithische Trägerkörper des Katalysators besitzt vorzugsweise eine hohe spezifische Oberfläche. Als Trägerkörper können aber auch Schüttkörper eingesetzt werden, um eine hohe spezifische Oberfläche zu erzielen. Der monolithische Trägerkörper weist bevorzugt eine Vielzahl von Kanälen auf, welche beliebigen Querschnitt haben können. Der monolithische Trägerkörper kann z.B. aus im Wesentlichen parallelen Kanälen aufgebaut sein, welche quer zur Strömungsrichtung nicht miteinander verbunden sind. Er kann jedoch z.B. auch Kreuzstromkanäle aufweisen oder aus einem Schaum bestehen. Der Trägerkörper kann beispielsweise wabenförmig sein.

Die Wanddicke der Katalysatorkanäle sollte klein sein, um bei vorgegebenem Querschnitt des Katalysatorblockes einen minimalen Strömungswiderstand zu erreichen. Die minimale Wanddicke bei keramischen Trägerkörpern beträgt ca. 0,3 mm. Unterhalb dieser Wanddicke können thermische und mechanische Schäden an keramischen Trägerkörpern auftreten. Ein metallischer Trägerkörper ermöglicht eine geringere minimale Wanddicke. Sie kann ca. 0,05 mm betragen. Der Durchmesser der Kanäle beträgt beispielsweise 0,5 cm. Durch die geringe Wanddicke wird der Trägerkörper rasch erwärmt und ist beim Anfahren der Anlage schnell betriebsbereit.

Ein keramischer Trägerkörper wird z.B. durch Extrusion hergestellt. Zur Herstellung eines metallischen Trägerkörpers wird z.B. Metallfolie, ähnlich einer Wellpappe bestehend aus zwei ebenen Metallfolien mit dazwischen liegender gewellter Metallfolie, gewickelt.

Bevorzugte Metalle für den Trägerkörper sind z.B. Titan, Edelstahl. Ein bevorzugter keramischer Trägerkörper besteht z.B. aus Aluminiumoxid.

Der Trägerkörper ist mit einer Beschichtung versehen, welche wenigstens ein katalytisch aktives Edelmetall, z.B. Platin, Rhodium, enthält. Vorzugsweise enthält die Beschichtung Platin. Die Beschichtung kann auch Platin und Rhodium, beispielsweise in einem Gewichtsverhältnis von 5:1, enthalten. Die Beschichtungsmenge beträgt z.B. 1,4 bis 1,8 mg/cm³. Auch eine höhere Beschichtungsmenge von ca. 2,7 mg/cm³ ist möglich.

Zusätzlich kann zwischen dem Trägerkörper und der Beschichtung mindestens eine Zwischenschicht aufgebracht sein, welche im Wesentlichen dazu dient, die spezifische Oberfläche des Katalysators zu vergrößern. Die Zwischenschicht besteht beispielsweise aus Aluminiumoxid, wodurch die spezifische Oberfläche ca. 5000-fach größer ist als ohne Zwischenschicht.

Für das erfindungsgemäße Verfahren können als Katalysatoren beispielsweise handelsübliche Abgasreinigungskatalysatoren, wie sie für Otto- oder Dieselmotoren eingesetzt werden, oder Oxidationskatalysatoren, wie sie für dieselbetriebene LKWs oder Autobusse, verwendet werden (z.B. HJS-Kat 2000 der Firma HJS Fahrzeugtechnik GmbH Co., Deutschland).

Anstelle eines einzelnen Katalysators können auch mehrere Katalysatoren parallel geschaltet werden, um beispielsweise Gasströme mit hohem Anteil an Wasserstoff zu oxidieren und gleichzeitig den Druckverlust gering zu halten.

Der Überschuss an Sauerstoff enthaltendem Gas wird bei einer Temperatur von 120 bis 300°C, bevorzugt von 150 bis 180°C, durch den Katalysator geleitet. Dies kann entweder durch Erwärmen des Sauerstoffs vor dem Eintritt in den Katalysator, z.B. mit Hilfe eines Wärmetauschers, oder durch Erwärmen des Katalysators selbst geschehen. Ein metallischer Katalysator kann beispielsweise induktiv beheizt werden. Der Katalysator kann zur Zuführung von Wärme auch mit einem Heizmantel versehen sein.

Der Druckverlust beim Durchströmen des Katalysators beträgt vorzugsweise weniger als 100 mbar, besonders bevorzugt weniger als 10 mbar. Abhängig von der Größe des gewählten Katalysators ist der Volumenstrom des Sauerstoffs zu begrenzen, wenn eine Fahrweise des Katalysators ohne nennenswerten Druckverlust gewährleistet werden soll. Eine Druckerhöhung im Katalysator bei Erhöhung des Volumenstroms ist für das Elektrolyseverfahren, insbesondere für die Elektrolyse einer wässrigen Lösung von Chlorwasserstoff, nachteilig. Wie aus DE-A 10 138 215 bekannt, wird bei der Salzsäure-Elektrolyse die Anodenhalbzelle auf einem höheren Druck gehalten als die Kathodenhalbzelle. Durch den höheren Druck in der Anodenhalbzelle wird die Kationenaustauschermembran auf die Gasdiffusionselektrode gedrückt und diese wiederum auf den Stromverteiler. Kommt es nun zu einem zu hohen Druckverlust in dem Katalysator, so würde sich der Druck in der Kathodenhalbzelle erhöhen und damit die Gasdiffusionselektrode von dem Stromverteiler weg gedrückt werden. Für die Rezyklierung größerer Sauerstoffströme ist daher die Parallelschaltung mehrerer Katalysatoren oder die Wahl eines entsprechend großen Katalysators vorteilhaft, um zu hohe Drücke im Katalysator zu vermeiden. Alternativ müsste der anodenseitige Druck simultan mit dem kathodenseitigen Druckverlust angehoben werden, damit der Differenzdruck zwischen Kathoden- und Anodenraum aufrecht erhalten bleibt

Das überschüssige Sauerstoff enthaltende Gas wird nach der katalytischen Oxidation von Wasserstoff erneut dem Kathodenhalbelement zugeführt. Um stets einen Überschuss an Sauerstoff zur Verfügung zu stellen, wird zusätzlich Sauerstoff oder Luft oder mit Sauerstoff angereicherte Luft dem Kathodenhalbelement zugeführt. Der frisch zugeführte Sauerstoff wird beispielsweise vor Eintritt in das Kathodenhalbelement mit dem gereinigten Sauerstoffstrom vermischt.

Mit dem erfindungsgemäßen Verfahren ist es beispielsweise möglich, mit nur einem Katalysator den Überschuss an Sauerstoff (Sauerstoffabgasstrom) von ca. 70 bis 100 m³/h eines Elektrolyseurs mit einer Chlorproduktion von ca. 10.000 t.p.a. ohne nennenswerten Druckaufbau zu reinigen.

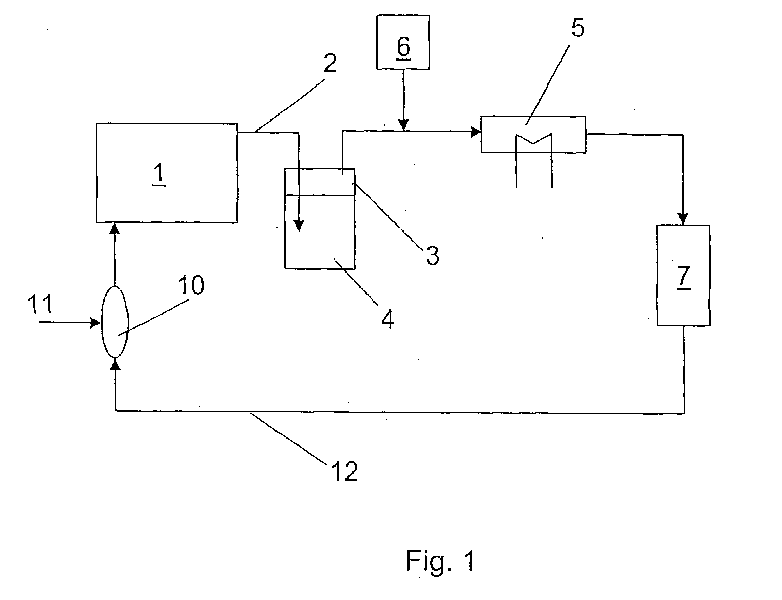

Nachfolgend wird die Erfindung anhand der Figur 1 näher erläutert. Figur 1 zeigt ein Fließbild einer Ausführungsform des erfindungsgemäßen Verfahrens, wie es in dem nachfolgenden Beispiel zu Testzwecken eingesetzt wurde.

### Beispiele

Aus dem Kathodenraum eines Pilotelektrolyseurs 1 mit fünf Elementen einer Fläche von je 0,88 m² wird ein Sauerstoffabgasstrom 2 von 2 bis 6,5 m³/h, welcher mit Wasserdampf gesättigt ist und eine Temperatur von ca. 50°C aufweist, abgeführt. Der Abgasstrom 2 wird ca. 30 cm tief in einen Behälter 3 getaucht, in dem sich das über einen separaten Ausgang ablaufende Reaktionswasser 4 sammelt (das Reaktionswasser oder Kathodenkondensat besteht aus einer stark verdünnten, ca. 1 gew.-%igen Salzsäure).

Dem aus dem Behälter 3 entweichende Sauerstoffabgasstrom 2 wurde aus einer Wasserstoffquelle 6 dosierte Mengen Wasserstoff zugeführt. Als Wasserstoffquelle 6 diente eine Laborelektrolysezelle zur Elektrolyse von Wasser, in der kathodisch Wasserstoff gebildet wurde. Der mit Wasserstoff versetzte Sauerstoffabgasstrom 2 wird durch eine Edelstahlleitung geführt, welche extern mit einem elektrischen Heizband 5 mit 750 Watt Heizleistung beheizt ist, und so auf ca. 150 bis 180°C erwärmt wird. Anschließend wird der Abgasstrom 2 durch einen Katalysator 7, hier einen PKW-Standardkatalysator vom Typ HJS VW 80/Coupe Typ 81 der Fa. HJS Fahrzeugtechnik GmbH Co., Deutschland, geleitet.

Sowohl die zu dem Katalysator 7 führende Leitung als auch der Katalysator 7 selbst sind wärmedämmend isoliert. Im Katalysator 7 findet die Umsetzung evtl. vorhandenen Wasserstoffgases mit dem Sauerstoffabgas 2 zu Wasser statt. Der Katalysator 7 ist vertikal angeordnet, so dass der Sauerstoffabgasstrom 2 den Katalysator 7 von oben nach unten durchströmt. Das im Katalysator 7 gebildete Wasser kann somit, falls es nicht als Wasserdampf vorliegt und somit den Katalysator 7 gasförmig verlässt, aus dem Katalysator 7 nach unten abfließen.

Das den Katalysator 7 verlassende Sauerstoffabgas 12 ist bei Einhalten der Arbeitstemperatur von mind. 150 bis 180°C nahezu wasserstofffrei und weist eine maximale Wasserstoffkonzentration von ca. 10 Vol. ppm auf.

Der vom Wasserstoff befreite Abgasstrom 12 wird mittels einer Düse 10, z.B. einer Venturidüse, mit Frischsauerstoff 11 vermischt und dem Kathodenhalbelement des Elektrolyseurs 1 zugeführt.

In der nachfolgenden Tabelle sind die Wasserstoffkonzentrationen (H₂-Konz.) in Vol. ppm vor und nach der katalytischen Oxidation in dem Katalysator 7 sowie die Temperaturen des Sauerstoffabgasstromes 2, 12 vor und nach dem Katalysator 7 aufgeführt. Die Wasserstoffkonzentration wurde vor dem Katalysator 7 mittels einer katalytischen Messzelle der Fa. Zellweger und nach dem Katalysator 7 mit einem mobilen Gaschromatographen der Firma Agilent gemessen. Die Wasserstoffkonzentration vor dem Katalysator 7 entspricht im Wesentlichen der Wasserstoffmenge, welche mittels der Wasserstoffquelle 6 dem Sauerstoffabgasstrom 2 zugeführt wurde. Außerdem wurde der Volumenstrom des frisch zugeführten Sauerstoffs 11 gemessen, welcher vor Eintritt des Sauerstoffgasstroms in den Elektrolyseur 1 mittels einer Düse 10 mit dem von Wasserstoff befreiten Sauerstoffabgasstrom 12 vermischt wird.

Die Versuche zeigen die Abhängigkeit der Wasserstoffzersetzung von der Temperatur des Sauerstoffabgasstroms 2 vor dem Katalysator. Bei einer Temperatur von 198°C wird die Wasserstoffkonzentration trotz hoher Ausgangskonzentration auf unter 10 Vol. ppm verringert.

| **H₂-Konz. [ppm] vor Katalysator** | **H₂-Konz. [ppm] nach Katalysator** | **Temperatur [°C] vor Katalysator** | **Temperatur [°C] nach Katalysator** | **Volumenstrom Frischsauerstoff [m³/h]** |
|---|---|---|---|---|
| 766 | 13 | 158 | 128 | 3,6 |
| 2039 | 12 | 155 | 123 | 3,6 |
| 3994 | 12 | 155 | 127 | 3,6 |
| 6000 | 7 | 198 | 147 | 3,0 |
| 100 | 10 | 147 | 123 | 3,6 |

## Patentansprüche

1. Verfahren zur Elektrolyse einer wässrigen Lösung von Chlorwasserstoff oder Alkalichlorid in einer Elektrolysezelle, wenigstens bestehend aus einem Anodenhalbelement und einer Anode, einem Kathodenhalbelement und einer Gasdiffusionselektrode als Kathode, einer Kationenaustauschermembran zur Trennung des Anodenhalbelements und des Kathodenhalbelements, wobei dem Kathodenhalbelement ein Sauerstoff enthaltendes Gas zugefübrt und überschüssiges, Sauerstoff enthaltendes Gas aus dem Kathodenhalbelement abgeführt wird, **dadurch gekennzeichnet, dass** das aus dem Kathodenhalbelement abgeführte überschüssige, Sauerstoff und Wasserstoff enthaltende Gas einer katalytischen Oxidation von Wasserstoff unterworfen wird, das Überschussgas bei einer Temperatur von 120 bis 300°C, durch einen Katalysator geleitet wird und das behandelle Gas in das Kathodenhalbelement recykliert wird.

2. Verfahren nach Anspruch 1, **dadurch gekennzeichnet, dass** der katalysator, wenigstens aus einem Trägerkörper aus Keramik oder Metall, vorzugsweise Keramik, und einer Beschichtung, enthaltend ein katalytisch wirksames Edelmetal besteht.

3. Verfahren nach Anspruch 2, **dadurch gekennzeichnet, dass** die Beschichtung Platin enthält.

4. Verfahren nach Anspruch 2, **dadurch gekennzeichnet, dass** die Beschichtung Platin und Rhodium enthält.

5. Verfahren nach einem der Ansprüche 2 bis 4, **dadurch gekennzeichnet, dass** sich zwischen dem Trägerkörper und der Beschichtung eine Zwischenschicht, welche Aluminiumoxid enthält, befindet.

6. Verfahren nach einem der Ansprüche 2 bis 5, **dadurch gekennzeichnet, dass** das Sauerstoff und Sauerstoff und Wasserstoff enthaltend Gas bei
einer Temperatur von 150 bis 180°C durch den Katalysator geleitet wird.

7. Verfahren nach einem der Ansprüche 2 bis 6, **dadurch gekennzeichnet, dass** der Druckverlust beim Durchströmen des Katalysators weniger als 100 mbar, vorzugsweise weniger als 10 mbar, beträgt.

8. Verfahren nach einem der Ansprüche 2 bis 7, **dadurch gekennzeichnet, dass** der Überschuss an Sauerstoff, Luft oder mit Sauerstoff angereicherter Luft nach der katalytischen Oxidation von Wasserstoff erneut dem Kathodenhalbelement zugeführt wird.

## Claims

1. Process for the electrolysis of an aqueous solution of hydrogen chloride or alkali metal chloride in an electrolysis cell consisting of at least an anode half element and an anode, a cathode half element and a gas diffusion electrode as cathode, a cation-exchange membrane for separating the anode half element and the cathode half element, where an oxygen-containing gas is fed to the cathode half element and excess, oxygen-containing gas is discharged from the cathode half element, **characterized in that** the excess, oxygen- and hydrogen-containing gas discharged from the cathode half element is subjected to a catalytic oxidation of hydrogen, the excess gas is passed at a temperature of from 120 to 300°C through a catalyst and the treated gas is recycled to the cathode half element.

2. Process according to Claim 1, **characterized in that** the catalyst consists of at least a support body composed of ceramic or metal, preferably ceramic, and a coating containing a catalytically active noble metal.

3. Process according to Claim 2, **characterized in that** the coating contains platinum.

4. Process according to Claim 2, **characterized in that** the coating contains platinum and rhodium.

5. Process according to any of Claims 2 to 4, **characterized in that** an intermediate layer containing aluminium oxide is present between the support body and the coating.

6. Process according to any of Claims 2 to 5, **characterized in that** the oxygen- and hydrogen-containing gas is passed through the catalyst at a temperature of from 150 to 180°C.

7. Process according to any of Claims 2 to 6, **characterized in that** the pressure drop on flowing through the catalyst is less than 100 mbar, preferably less than 10 mbar.

8. Process according to any of Claims 2 to 7, **characterized in that** the excess of oxygen, air or oxygen-enriched air after the catalytic oxidation of hydrogen is recirculated to the cathode half element.

## Revendications

1. Procédé d'électrolyse d'une solution aqueuse de chlorure d'hydrogène ou d'un chlorure alcalin dans une cellule d'électrolyse, au moins constituée par un demi-élément d'anode et une anode, un demi-élément de cathode et une électrode à diffusion de gaz en tant que cathode, une membrane échangeuse de cations pour la séparation du demi-élément d'anode et du demi-élément de cathode, le demi-élément de cathode étant alimenté avec un gaz contenant de l'oxygène et le gaz contenant de l'oxygène en excès étant évacué du demi-élément de cathode, **caractérisé en ce que** le gaz contenant de l'oxygène et de l'hydrogène en excès évacué du demi-élément de cathode est soumis à une oxydation catalytique de l'hydrogène, le gaz en excès est conduit à une température de 120 à 300 °C au travers d'un catalyseur et le gaz traité est recyclé dans le demi-élément de cathode.

2. Procédé selon la revendication 1, **caractérisé en ce que** le catalyseur est au moins constitué par un corps support en céramique ou métal, de préférence céramique, et un revêtement contenant un métal noble catalytiquement actif.

3. Procédé selon la revendication 2, **caractérisé en ce que** le revêtement contient du platine.

4. Procédé selon la revendication 2, **caractérisé en ce que** le revêtement contient du platine et du rhodium.

5. Procédé selon l'une quelconque des revendications 2 à 4, **caractérisé en ce qu'**une couche intermédiaire qui contient de l'oxyde d'aluminium se trouve entre le corps support et le revêtement.

6. Procédé selon l'une quelconque des revendications 2 à 5, **caractérisé en ce que** le gaz contenant de l'oxygène et de l'hydrogène est conduit au travers du catalyseur à une température de 150 à 180 °C.

7. Procédé selon l'une quelconque des revendications 2 à 6, **caractérisé en ce que** la perte de charge lors de la traversée du catalyseur est inférieure à 100 mbar, de préférence inférieure à 10 mbar.

8. Procédé selon l'une quelconque des revendications 2 à 7, **caractérisé en ce que** le demi-élément de cathode est de nouveau alimenté avec l'excès d'oxygène, d'air ou d'air enrichi en oxygène après l'oxydation catalytique de l'hydrogène.
